(19) Europäisches Patentamt
European Patent Office
Office européen des brevets

(11) Veröffentlichungsnummer : **0 050 587**
**B1**

(12) **EUROPÄISCHE PATENTSCHRIFT**

(45) Veröffentlichungstag der Patentschrift : **03.04.85**

(51) Int. Cl.⁴ : **C 09 B 67/22**, C 09 B 29/085, C 09 B 43/12, D 06 P 3/54

(21) Anmeldenummer : **81810410.1**

(22) Anmeldetag : **12.10.81**

(54) **Mischung von Farbstoffen.**

(30) Priorität : **17.10.80 CH 7773/80**

(43) Veröffentlichungstag der Anmeldung : **28.04.82 Patentblatt 82/17**

(45) Bekanntmachung des Hinweises auf die Patenterteilung : **03.04.85 Patentblatt 85/14**

(84) Benannte Vertragsstaaten : **CH DE FR GB IT LI**

(56) Entgegenhaltungen :
**FR-A- 1 572 585**
**GB-A- 1 360 482**
**US-A- 3 955 919**

(73) Patentinhaber : **CIBA-GEIGY AG**
**Postfach**
**CH-4002 Basel (CH)**

(72) Erfinder : **Della Casa, Angelo**
**Luzernerring 62**
**CH-4056 Basel (CH)**
Erfinder : **Eugster, Peter, Dr.**
**Mattweg 96**
**CH-4144 Arlesheim (CH)**
Erfinder : **Koller, Stefan, Dr.**
**Zelglistrasse**
**CH-4431 Ramlinsburg (CH)**

**EP 0 050 587 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft eine Mischung von Farbstoffen, Verfahren zur Herstellung dieser Farbstoffmischung und deren Verwendung zum Färben und Bedrucken von halbsynthetischen und synthetischen Textilmaterialien, vor allem Polyestermaterialien.

Aus der DE-AS 1644305 sind wasserunlösliche Monoazofarbstoffe der folgenden Formel I bekannt, die blaue Ausfärbungen auf Polyestermaterialien ergeben ; diese Farbstoffe sind jedoch bezüglich ihres Farbstoffaufbauvermögens und der erzielbaren Farbtiefe nicht ganz zufriedenstellend.

Andererseits sind auch Farbstoffe der folgenden Formel II aus der F-PS 1 572 585 bekannt, mit denen aber auf Polyestermaterialien keine marineblauen Ausfärbungen erhalten werden ; zudem haben sie nur ein sehr geringes Farbstoffaufbauvermögen.

Es wurde nun gefunden, dass man mit einer Mischung der beiden Farbstoffe I und II auf Polyestermaterialien überraschenderweise farbkräftige, marineblaue Ausfärbungen erhält, wobei die Farbstoffmischung sowohl ein ausgezeichnetes Aufbauvermögen besitzt als auch farbstarke Ausfärbungen mit ausgezeichneten Gesamtechtheiten ergibt, die derjenigen der Einzelfarstoffe I oder II deutlich überlegen ist.

Die Erfindung betrifft somit eine Farbstoffmischung der Formeln

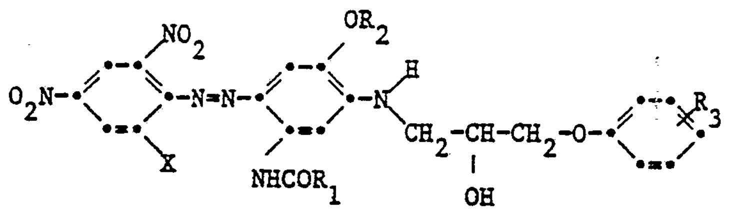

(I)

und

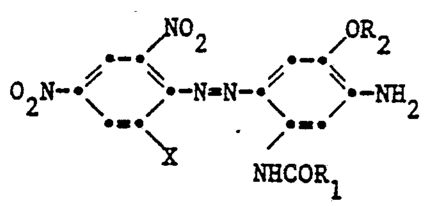

(II)

worin bedeuten

X ein Halogenatom,

$R_1$ und $R_2$ unabhängig voneinander eine $C_1$-$C_4$-Alkylgruppe, und

$R_3$ Wasserstoff, Halogen oder $C_1$-$C_4$-Alkyl.

X und $R_3$ in der Bedeutung eines Halogenatoms stellt ein Fluor, Chlor oder Bromatom dar. In den bevorzugten Mischungen bedeutet X je Chlor.

$R_1$, $R_2$ und $R_3$ in der Bedeutung einer $C_1$-$C_4$-Alkylgruppe stellt sowohl eine unverzweigte als auch verzweigte Alkylgruppe dar. Es handelt sich beispielsweise um die Methyl-, Aethyl-, n- und iso-Propyl und n-, sec- oder tert. Butylgruppe. In den bevorzugten Mischungen bedeutet $R_1$ Aethyl, $R_2$ Methyl und $R_3$ Wasserstoff.

Eine besonders interessante Mischung, da sie farbkräftige marineblaue Ausfärbungen mit einem sehr guten Farbstoffaufbauvermögen auf Polyestermaterialien ergibt, besteht aus einer Farbstoffmischung der Formeln

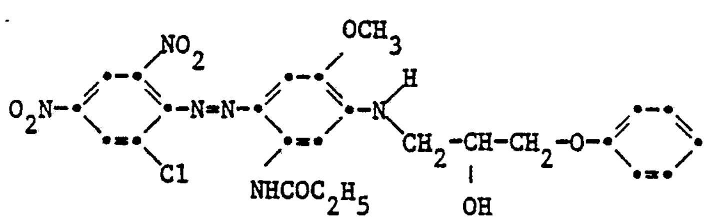

und

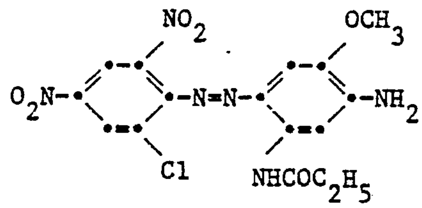

Bevorzugte Mischungen bestehen aus 30-80 Gew.-% insbesondere 55-70 Gew.-% des Farbstoffes der Formel I und 70-20 Gew.-% insbesondere 45-30 Gew.-% des Farbstoffes der Formel II.

Die Herstellung der Mischung der Farbstoffe I und II erfolgt nach bekannten Methoden, beispielsweise derart, dass man :

a) die Farbstoffe der Formeln I und II miteinander mischt, wobei die Farbstoffe der Formeln I und II hergestellt werden, indem man in an sich bekannter Weise ein Amin der Formel V

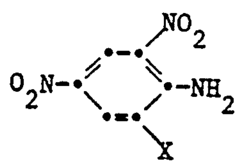

(V)

diazotiert und mit einer Kupplungskomponente der Formel III

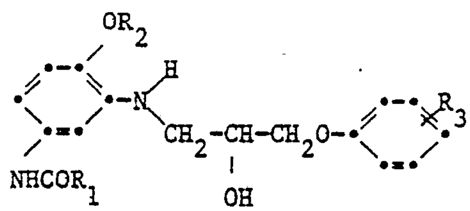

(III)

bzw. mit einer Kupplungskomponente der Formel IV

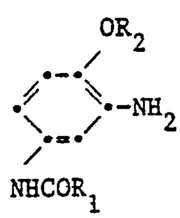

(IV)

kuppelt in welchen Formeln die Symbole X, $R_1$, $R_2$ und $R_3$ die unter Formel I angegebene Bedeutung haben, oder

b) indem man ein Amin der Formel V

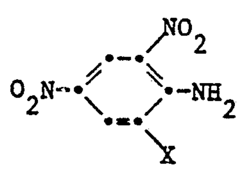

(V)

diazotiert und mit einer Mischung der Kupplungskomponenten der Formeln III und IV

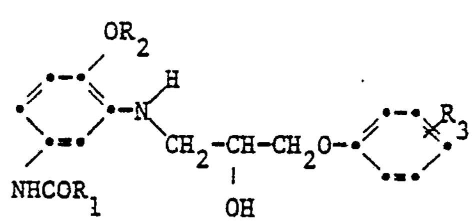

(III)

und

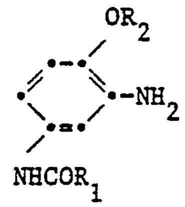

(IV)

in welchen Formeln die Symbole X, $R_1$, $R_2$ und $R_3$ die unter den Formeln I und II angegebene Bedeutung haben, kuppelt, oder

c) indem man auf einen Monoazofarbstoff der Formel II

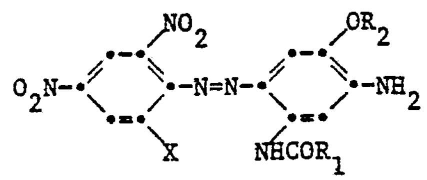

(II)

eine Epoxyverbindung der Formel VI

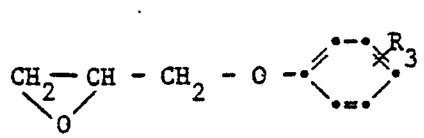

(VI)

worin die Symbole X, $R_1$, $R_2$ und $R_3$ die angegebene Bedeutung haben im Unterschuss einwirken lässt.

Was die bevorzugte Verfahrensvariante b) betrifft, so sind die Amine der Formel V bekannt und können nach bekannten Methoden hergestellt werden ; ebenso die Amine der Formel IV, und die Verbindungen der Formel III. Letztere können erhalten werden, indem man ein Amin der Formel IV mit einer Epoxyverbindung der Formel VI

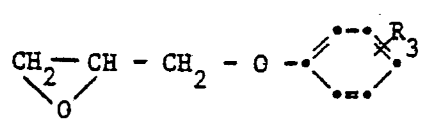

(VI)

im molaren Verhältnis umsetzt. Die Epoxyverbindungen der Formel VI sind ebenfalls bekannt. Man setzt die beiden Kupplungskomponenten vorzugsweise in Mengen von 30-80 % insbesondere 55-70 % der Verbindung III und 70-20 % insbesondere 45-30 % der Verbindung IV ein. Als Amine der Formel V kommen beispielsweise in Frage : 2-Chlor-4,6-dinitro-anilin und 2-Brom-4,6-dinitro-anilin. Von den Aminen der Formel IV sind z. B. erwähnt : 2-Methoxy-5-methylcarbonylamino-anilin und vorallem 2-Methoxy-5-äthylcarbonylamino-anilin. Als Kupplungskomponenten der Formel III kommen z. B. in Frage :

3-N-(β-oxy-γ-phenoxy)-propylamino-4-methoxy-acetylanilid,
3-N-(β-oxy-γ-[o-methyl]-phenoxy)-propylamino-4-methoxy-propionylanilid,
3-N-(β-oxy-γ-[3'-chlor]-phenoxy)-propylamino-4-methoxy-acetylanilid,
3-N-(β-oxy-γ-[4'-methyl]-phenoxy)-propylamino-4-methoxy-acetylanilid,
3-N-(β-oxy-γ-phenoxy)-propylamino-4-methoxy-propionylanilid,
3-N-(β-oxy-γ-phenoxy)-propylamino-4-äthoxyacetlylanilid,
3-N-(β-oxy-γ-phenoxy)-propylamino-4-äthoxypropionylanilid, und
3-N-(β-oxy-γ-phenoxy)-propylamino-4-n-propoxyacetylanilid.

Was die Verfahrensvariante c) betrifft, so geht man zweckmässig derart vor, dass man den Monoazofarbstoff mit einem Unterschuss der Epoxyverbindung der Formel VI zur Umsetzung bringt ; vorteilhaft verwendet man 1 Mol des Monoazofarbstoffes und 0,7 Mol des Epoxyds der Formel VI.

Die Diazotierungs- und Kupplungsreaktionen erfolgen ebenfalls nach bekannter Art und Weise wie z. B. beschrieben in Ullmanns Encyklopädie der technischen Chemie, Bd. 5 (1954) Seite 783 ff.

Verwendung finden die erfindungsgemässen Farbstoffmischungen zum Färben, Klotzen oder Bedrucken von halbsynthetischen und vorallem synthetischen Textilmaterialien. Als halbsynthetische Textilmaterialien kommen vorallem Cellulose 2 1/2 Acetat und Cellulosetriacetat in Frage. Synthetische Textilmaterialien bestehen vor allem aus linearen, aromatischen Polyestern, beispielsweise solchen aus

Terephthalsäure und Glykolen, besonders Aethylenglykol oder Kondensationsprodukten aus Terephthalsäure und 1,4-Bis-(hydroxymethyl)-hexahydrobenzol ; Polycarbonate, zum Beispiel solchen aus α,α-Dimethyl-4,4'-dihydroxy-diphenylmethan und Phosgen, Fasern auf Polyvinylchlorid-Basis sowie Polyamid-Basis.

Das genannte Textilmaterial kann dabei in den verschiedensten Verarbeitungsformen vorliegen wie z. B. als Faser, Faden oder Vlies, als Gewebe oder Gewirke.

Die Applikation der erfindungsgemässen Farbstoffmischungen erfolgt nach bekannten Färbeverfahren. Beispielsweise färbt man Polyesterfasermaterialien im Ausziehverfahren aus wässriger Dispersion in Gegenwart von üblichen anionischen oder nicht-ionischen Dispergiermitteln und gegebenenfalls üblichen Quellmitteln (Carrier) bei Temperaturen zwischen 80 und 125 °C oder in Abwesenheit von Carrier unter Druck bei etwa 100 bis 140 °C (HT-Verfahren). Cellulose-2 1/2-acetat färbt man vorzugsweise zwischen ungefähr 65 bis 85 °C und Cellulosetriacetat bei Temperaturen bis zu 115 °C. Die erfindungsgemässen Farbstoffmischungen eignen sich ferner zum Färben nach dem Thermosol-Verfahren ; sie färben gleichzeitig im Färbebad anwesende Wolle und Baumwolle nicht oder nur wenig an (sehr gute Reserve), sodass sie gut zum Färben von Polyester/Wolle- und Polyester/Cellulosefaser-Mischgeweben verwendet werden können.

Es ist vorteilhaft die erfindungsgemässe Farbstoffmischung vor ihrer Verwendung in ein Farbstoffpräparat überzuführen. Hierzu wird die Farbstoffmischung vermahlen, sodass ihre Teilchengrösse im Mittel zwischen 0.01 und 10 µm beträgt. Das Vermahlen kann in Gegenwart von Dispergiermitteln erfolgen. Beispielsweise wird die getrocknete Farbstoffmischung mit einem Dispergiermittel gemahlen oder in Pastenform mit einem Dispergiermittel geknetet und hierauf im Vakuum oder durch Zerstäuben getrocknet. Mit den so erhaltenen Präparaten kann man, nach Zugabe von Wasser färben, klotzen oder bedrucken.

Beim Klotzen und Bedrucken wird man die üblichen Verdickungsmittel verwenden, z. B. modifizierte oder nichtmodifizierte natürliche Produkte, beispielsweise Alginate, Britishgummi, Gummi arabicum, Kristallgummi, Johannisbrotkernmehl, Tragan, Carboxyméthylcellulose, Hydroxyäthylcellulose, Stärke oder synthetische Produkte beispielsweise Polyacrylamide oder Polyvinylalkohole.

Die erfindungsgemässen Farbstoffmischungen verleihen den genannten Materialien vorallem dem Polyestermaterial marineblaue Farbtöne von sehr guten Echtheiten wie vorallem sehr guter Lichtechtheit, guter Sublimierechtheit, Thermofixier-, Plissier-, Chlor- und Nassechtheit wie Wasser-, Schweiss- und Waschechtheit ; die Ausfärbungen sind ferner gekennzeichnet durch eine gute pH-Stabilität.

Die erfindungsgemässen Farbstoffmischungen können auch gut verwendet werden zur Herstellung von Mischnuancen, vor allem im Schwarz- und Braunbereich.

Die folgenden Beispiele veranschaulichen die Erfindung ohne sie darauf zu limitieren ; Temperaturen sind in Grad Celsius angegeben ; Teile (T) bedeuten, sofern nichts anderes angegeben ist, Gewichtsteile.

## Beispiel 1

21,75 T 2,4-Dinitro-6-chloranilin werden mit Nitrosylschwefelsäure diazotiert. Diese Diazolösung wird, bei einer Temperatur von 0-5° unter Zusatz von Eis zu einem Gemisch von 17,2 T 3-N(β-oxy-γ-phenoxy)propylamino-4-methoxy-propionylanilid und 9,7 T 4-Propionyl-amido-2-aminoanisol gelöst in 90 T Essigsäure eingetropft. Nach beendeter Kupplung wird filtriert und mit Wasser neutral gewaschen. Das feuchte Nutschgut wird anschliessend in 500 T Wasser und 1 T eines Tensids 3-5 Std. am Rückfluss gekocht und heiss filtriert. Man erhält eine Farbstoffmischung folgender Zusammensetzung

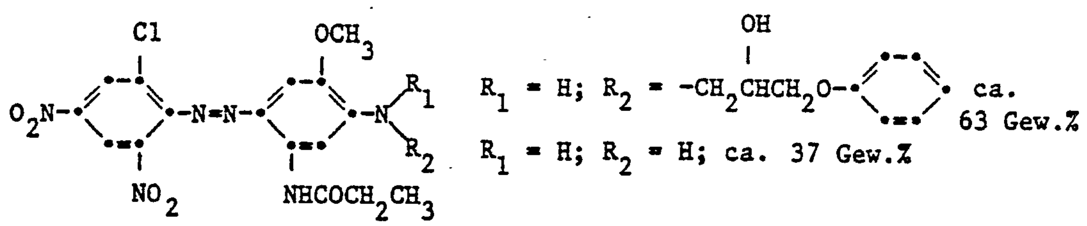

ca. 63 Gew.%

$R_1$ = H; $R_2$ = H; ca. 37 Gew.%

Die beschriebene Mischung kann auch durch Mischen der separat hergestellten Einzelfarbstoffe erhalten werden.

Zu einer Mischung mit ebenso guten färberischen Eigenschaften gelangt man, wenn man bei im übrigen gleicher Arbeitsweise anstelle der 17.2 T 3-N-(β-oxy-γ-phenoxy)-propylamino-4-methoxy-propionylanilid 17.4 T 3-N-(β-oxy-γ-[o-methyl]-phenoxy)-propylamino-4-methoxy-propionylanilid verwendet.

## Beispiel 2

1 T des gemäss Beispiel 1 erhaltenen Farbstoffgemisches wird mit 2 T einer 50 %igen wässerigen Lösung des Natriumsalzes der Dinaphthylmethandisulfonsäure nass vermahlen und getrocknet.

Dieses Farbstoffpräparat wird mit 40 T einer 10 %igen wässerigen Lösung des Natriumsalzes der N-Benzylheptadecyl-benzimidazoldisulfonsäure verrührt und 4 T einer 40 %igen Essigsäurelösung zugegeben. Durch Verdünnen mit Wasser wird daraus ein Färbebad von 4 000 T bereitet.

In dieses Bad geht man bei 50° mit 100 T eines Polyesterfaserstoffes ein, steigert die Temperatur innert einer halben Stunde auf 120 bis 130° und färbt eine Stunde in geschlossenem Gefäss bei dieser Temperatur. Anschliessend wird gut gespült. Man erhält eine sehr tiefe und kräftige marineblaue Färbung mit sehr guter Licht- und Sublimierechtheit.

Beispiel 3

2 T des gemäss Beispiel 1 erhaltenen Farbstoffgemisches werden in 4 000 T Wasser dispergiert. Zu dieser Dispersion gibt man 12 T des Natriumsalzes von o-Phenylphenol sowie 12 T Diammoniumphosphat und färbt 100 T Garn aus Polyäthylenglykolterephthalat 90 Minuten lang bei 95 bis 98° in dieser Flotte.

Das gefärbte Material wird anschliessend gespült und mit wässeriger Natronlauge und einem Dispergator nachbehandelt. Man erhält so eine marineblaue Färbung, mit sehr guter Licht- und Sublimierechtheit.

Beispiel 4

Polyäthylenglykolterephthalatgewebe wird auf einem Foulard bei 40° mit einer Flotte folgender Zusammensetzung imprägniert :

20 T des gemäss Beispiel 1 erhaltenen Farbstoffgemisches fein dispergiert in
10 T Natriumalginat
20 T Triäthanolamin
20 T Octylphenolpolyglykoläther und
930 T Wasser.

Das auf ca. 100 % abgequetschte Gewebe wird bei 100° getrocknet und anschliessend während 30 Sekunden bei einer Temperatur von 210° fixiert. Die gefärbte Ware wird mit Wasser gespült, geseift und getrocknet. Man erhält eine marineblaue Färbung mit sehr guter Licht- und Sublimierechtheit.

**Ansprüche**

1. Mischung der Farbstoffe der Formeln

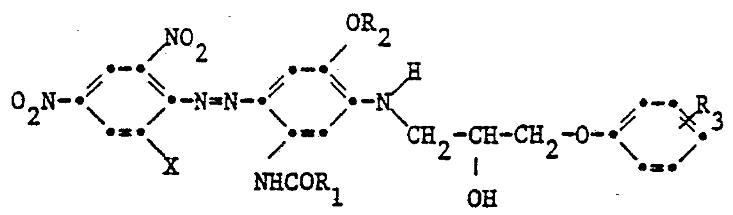

(I)

und

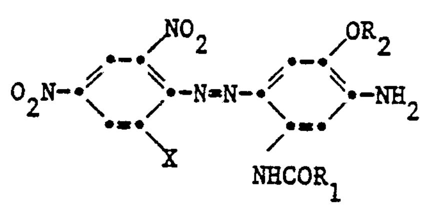

(II)

worin bedeuten

X ein Halogenatom,

$R_1$ und $R_2$ unabhängig voneinander eine $C_1$-$C_4$-Alkylgruppe, und

$R_3$ Wasserstoff, Halogen oder $C_1$-$C_4$-Alkyl.

2. Farbstoffmischung gemäss Anspruch 1 dadurch gekennzeichnet, dass die Verbindung der Formel I zu 30 bis 80 Gew.-% und die Verbindung der Formel II zu 70 bis 20 Gew.-% in der Mischung vorhanden ist.

3. Farbstoffmischung gemäss Anspruch 1 dadurch gekennzeichnet, dass die Verbindung der Formel I zu 55-70 Gew.-% und die Verbindung der Formel II zu 45-30 Gew.-% in der Mischung vorhanden ist.

4. Farbstoffmischung gemäss den Ansprüchen 1 bis 3 dadurch gekennzeichnet, dass X je Chlor bedeutet.

5. Farbstoffmischung gemäss den Ansprüchen 1 bis 3 dadurch gekennzeichnet, dass $R_1$ je Aethyl bedeutet.

6. Farbstoffmischung gemäss den Ansprüchen 1 bis 3 dadurch gekennzeichnet, dass $R_2$ je Methyl bedeutet.

7. Farbstoffmischung gemäss den Ansprüchen 1 bis 3 dadurch gekennzeichnet, dass $R_3$ Wasserstoff bedeutet.

8. Farbstoffmischung gemäss den Ansprüchen 1 bis 3 dadurch gekennzeichnet, dass sie aus den Farbstoffen

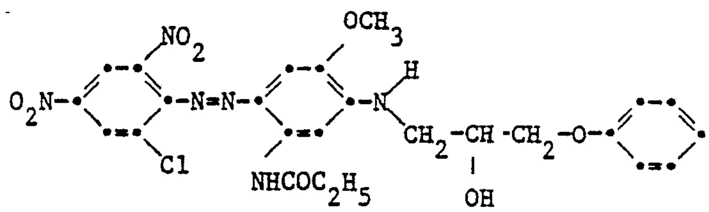

und

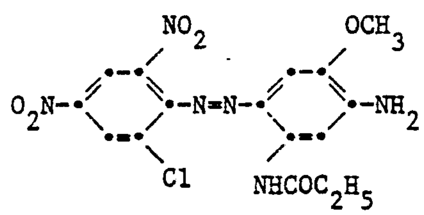

besteht.

9. Verfahren zur Herstellung der Farbstoffmischung gemäss Anspruch 1 dadurch gekennzeichnet, dass man

a) die Farbstoffe der Formeln I und II miteinander mischt, oder

b) ein Amin der Formel V

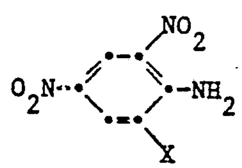

(V)

diazotiert und mit einer Mischung der Kupplungskomponenten der Formeln III und IV

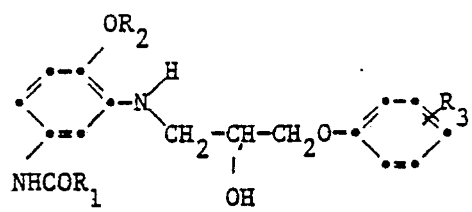

(III)

,

und

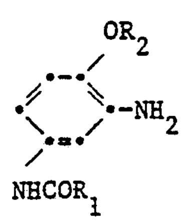

(IV)

in welchen Formeln die Symbole X, $R_1$, $R_2$ und $R_3$ die unter den Formeln I und II angegebene Bedeutung

haben, kuppelt, oder

c) auf einen Monoazofarbstoff der Formel II

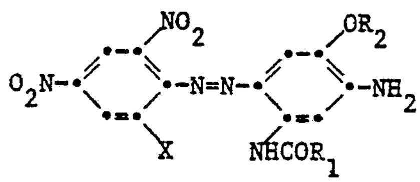

(II)

eine Epoxyverbindung der Formel VI

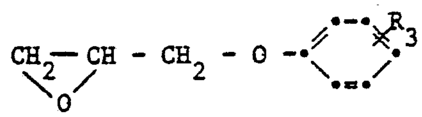

(VI)

worin die Symbole X, $R_1$, $R_2$ und $R_3$ die angegebene Bedeutung haben im Unterschuss einwirken lässt.

10. Verwendung der Farbstoffmischung gemäss Anspruch 1 oder der gemäss Anspruch 9 erhaltenen Farbstoffmischung zum Färben und Bedrucken von halbsynthetischen oder synthetischen Textilmaterialien.

11. Verwendung gemäss Anspruch 10 zum Färben und Bedrucken von Polyestermaterialien.

12. Die mit der Farbstoffmischung gemäss Anspruch 1 behandelten halbsynthetischen und synthetischen Textilmaterialien.

**Claims**

1. A mixture of the dyes of the formulae

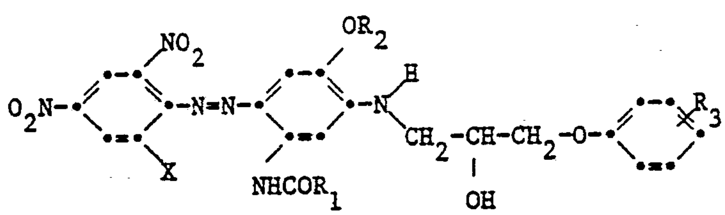

(I)

and

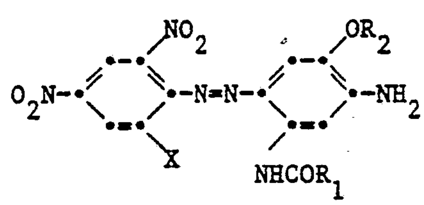

(II)

wherein

X is a halogen atom,

$R_1$ and $R_2$ are each independently a $C_1$-$C_4$-alkyl group, and

$R_3$ is hydrogen, halogen or $C_1$-$C_4$ alkyl.

2. A dye mixture according to claim 1, which mixture contains 30 to 80 % by weight of the compound of the formula I and 70 to 20 % by weight of the compound of the formula II.

3. A dye mixture according to claim 1, which mixture contains 55 to 70 % by weight of the compound of the formula I and 45 to 30 % by weight of the compound of the formula II.

4. A dye mixture according to any one of claims 1 to 3, wherein each X is chlorine.

5. A dye mixture according to any one of claims 1 to 3, wherein each $R_1$ is ethyl.

6. A dye mixture according to any one of claims 1 to 3, wherein each $R_2$ is methyl.

7. A dye mixture according to any one of claims 1 to 3, wherein $R_3$ is hydrogen.

8. A dye mixture according to any one of claims 1 to 3, which mixture consists of the dye

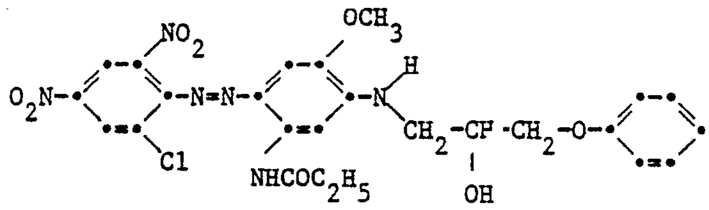

and

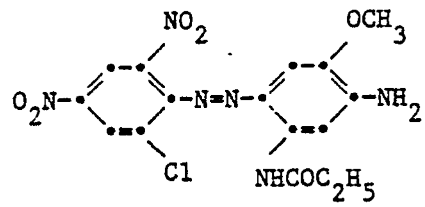

9. A process for the preparation of a dye mixture according to claim 1, which process comprises
a) mixing the dyes of the formulae I and II ; or
b) diazotising an amine of the formula V

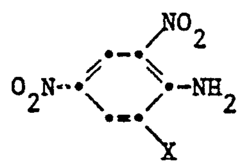

(V)

and coupling the diazotised product with a mixture of the coupling components of the formulae III and IV

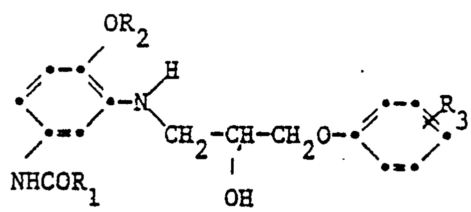

(III)

and

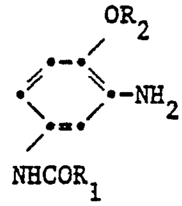

(IV)

in which formulae, the symbols X, $R_1$, $R_2$ and $R_3$ have the meanings defined for the formulae I and II ; or
c) reacting a monoazo dye of the formula II

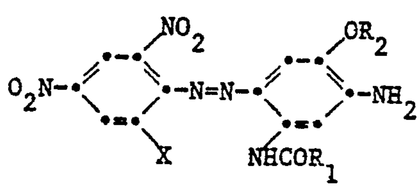

(II)

with less than the equivalent amount of an epoxy compound of the formula VI

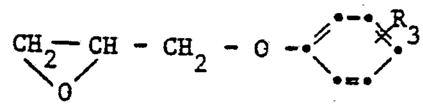

(VI),

wherein the symbols X, $R_1$, $R_2$ and $R_3$ have the given meanings.

10. Use of a dye mixture according to claim 1, or of a dye mixture obtained according to claim 9, for dyeing and printing semi-synthetic or synthetic textile materials.

11. Use according to claim 10 for dyeing and printing polyester materials.

12. The semi-synthetic and synthetic textile materials treated with a dye mixture according to claim 1.

**Revendications**

1. Mélange de colorants de formules

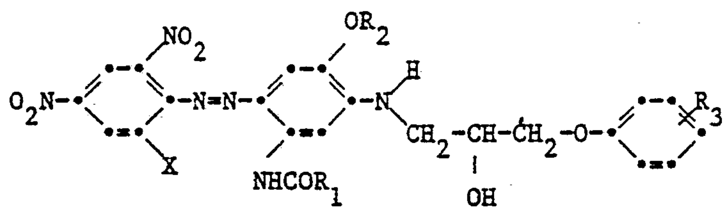

(I)

et

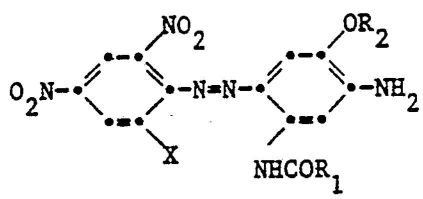

(II)

dans lesquelles

X est un atome d'halogène,

$R_1$ et $R_2$ indépendamment l'un de l'autre sont des groupes alkyle en $C_1$-$C_4$, et

$R_3$ est un atome d'hydrogène, un halogène ou un groupe alkyle en $C_1$-$C_4$.

2. Mélange de colorants selon la revendication 1, caractérisé par le fait que le composé de formule I est présent dans le mélange à raison de 30 à 80 % en poids et le composé de formule II à raison de 70 à 20 % en poids.

3. Mélange de colorants selon la revendication 1, caractérisé par le fait que le composé de formule I est présent dans le mélange à raison de 55-70 % en poids, et le composé de formule II à raison de 45-30 % en poids.

4. Mélange de colorants selon les revendications 1 à 3, caractérisé par le fait que chaque X désigne le chlore.

5. Mélange de colorants selon les revendications 1 à 3, caractérisé par le fait que chaque $R_1$ désigne le groupe éthyle.

6. Mélange de colorants selon les revendications 1 à 3, caractérisé par le fait que chaque $R_2$ désigne le groupe méthyle.

7. Mélange de colorants selon les revendications 1 à 3, caractérisé par le fait que $R_3$ est un atome d'hydrogène.

8. Mélange de colorants selon les revendications 1 à 3, caractérisé par le fait qu'il est constitué par les colorants

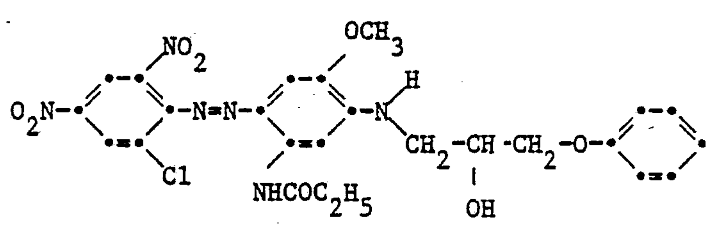

et

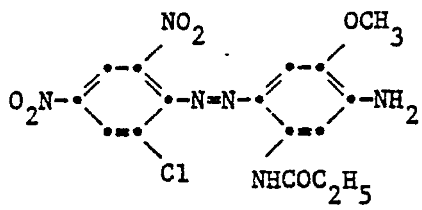

9. Procédé pour la préparation du mélange de colorants selon la revendication 1, caractérisé par le fait que

a) on mélange mutuellement les colorants de formules I et II, ou bien

b) on diazote une amine de formule V

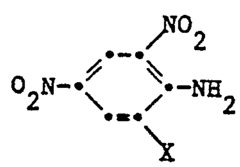

(V)

et on copule le diazo avec un mélange d'agents de copulation ayant les formules III et IV

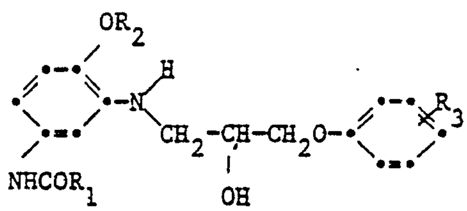

(III)

et

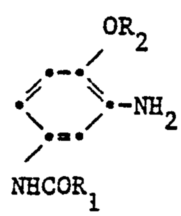

(IV)

formules dans lesquelles les symboles X, $R_1$, $R_2$ et $R_3$ ont les significations données sous les formules I et II, ou bien

c) on fait réagir une quantité par défaut d'un composé époxy de formule VI

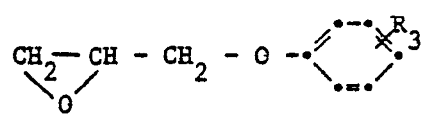

(VI)

sur un colorant monoazoïque de formule II

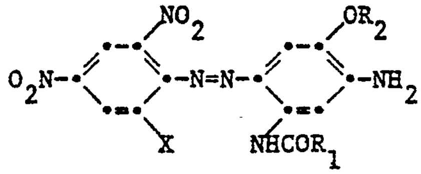

(II)

dans lesquelles les symboles X, $R_1$, $R_2$ et $R_3$ ont les significations données.

10. Utilisation du mélange de colorants selon la revendication 1, ou du mélange de colorants obtenu

selon la revendication 9, pour teindre et imprimer des matières textiles semi-synthétiques ou synthétiques.

11. Utilisation selon la revendication 10, pour teindre et imprimer des matières en polyester.

12. Les matières textiles semi-synthétiques et synthétiques traitées avec le mélange de colorants selon la revendication 1.